# EUROPÄISCHE PATENTSCHRIFT

(11) **EP 3 389 237 B1**
(45) Veröffentlichungstag und Bekanntmachung des Hinweises auf die Patenterteilung: **03.04.2019**
(21) Anmeldenummer: 17165843.8
(22) Anmeldetag: 10.04.2017
(51) Int. Cl.: H04L 29/06, H04L 29/08, H04L 29/12

(54) **VERFAHREN, VORRICHTUNG, COMPUTERLESBARES MEDIUM UND SYSTEM ZUM AUFBAU VON VERBINDUNGEN ZWISCHEN EINEM CLIENT UND EINEM ZIEL- ODER ENDGERÄT**
METHOD, DEVICE, COMPUTER-READABLE MEDIUM, AND SYSTEM FOR ESTABLISHING LINKS BETWEEN A CLIENT AND A TARGET OR END DEVICE
PROCÉDÉ, DISPOSITIF, MOYEN LISIBLE PAR ORDINATEUR ET SYSTÈME D'ÉTABLISSEMENT DE LIAISONS ENTRE UN CLIENT ET UN TERMINAL OU UN DISPOSITIF CIBLE

(43) Veröffentlichungstag der Anmeldung: 17.10.2018
(73) Patentinhaber: ise Individuelle Software und Elektronik GmbH, 26122 Oldenburg (DE)
(72) Erfinder: Sahm, Christoph, 26131 Oldenburg (DE)
(74) Vertreter: Angerhausen, Christoph

(56) Entgegenhaltungen:
- US-A1- 2005 022 031
- US-A1- 2015 256 389
- US-A1- 2016 087 933

## Beschreibung

### GEBIET

Die vorliegende Patentanmeldung bezieht sich auf Verfahren, Vorrichtungen, computerlesbare Medien und Systeme zum Aufbau von Verbindungen zwischen einem Client und einem Ziel- oder Endgerät, beispielsweise einem Webserver, welche beispielsweise aus der US 2016/087933 A1, der US 2015/256389 A1 oder der US 2005/022031 A1 bekannt sind.

### HINTERGRUND

Zur Verschlüsselung von Verbindungsanfragen, insbesondere über HTTP, hat sich das SSL bzw. TLS -Protokoll durchgesetzt. SSL-Zertifikate werden von unabhängigen Zertifizierern an Betreiber von Webseiten vergeben. Bei Verbindungsanfragen kann ein Client anhand des Zertifikats sicherstellen, dass die Webseite authentisch ist.

Auf Webserver, die in einem lokalen Netzwerk liegen, kann von außerhalb des lokalen Netzwerks nicht ohne weiteres zugegriffen werden. Herkömmliche Techniken, wie etwa Virtual Private Networks, VPN, ermöglichen derartige Verbindungen, sind jedoch aufwendig in der Konfiguration. Insbesondere müssen VPN neu konfiguriert werden, wenn sich die Konstellation von Webservern in dem lokalen Netzwerk ändert. Die Konfiguration erfolgt in der Regel manuell durch einen Systemadministrator. Verschlüsselungen, beispielsweise mittels Zertifikaten, werden für solche Webserver üblicherweise nicht durchgeführt.

### ZUSAMMENFASSUNG

Der hier offenbarten Erfindung liegt die Aufgabe zugrunde, einen möglichst wartungsfreien und sicheren Zugriff auf lokale Endgeräte zu ermöglichen.

Eine erste Ausführungsform betrifft ein System, umfassend einen Client, einen Server, eine oder mehrere Service-Komponenten und ein oder mehrere Endgeräte, die mit den ein oder mehreren Service-Komponenten verbunden sind, wobei der Server für jedes der Endgeräte Host-Namen bereitstellt, der dem jeweiligen Endgerät sowie der entsprechenden Service-Komponente zugeordnet ist, wobei der Server eingerichtet ist, als Antwort auf eine Verbindungsanfrage des Clients an einen der Host-Namen die Verbindungsanfrage an diejenige der ein oder mehreren Service-Komponenten weiterzuleiten, der der Host-Name zugeordnet ist, und wobei jede der Service-Komponenten eingerichtet ist, als Antwort auf eine Verbindungsanfrage zu prüfen, ob für das Endgerät, dem der Host-Name zugeordnet ist, ein Zertifikat vorliegt, wobei die Service-Komponente von einem externen Zertifizierer ein Zertifikat anfordert, falls kein Zertifikat vorliegt, und anhand des Zertifikats über den Server eine Verbindung zu dem Client aufbaut und Datenpakete zwischen dem Client und dem Endgerät weiterleitet.

Insbesondere kann der Server ferner eingerichtet sein, aus dem Host-Namen eine erste Zeichenkette zu extrahieren und aus der ersten Zeichenkette die Adresse eines entsprechenden Endgeräts zu ermitteln.

Insbesondere kann das System umfassen, dass die Service-Komponente ferner eingerichtet ist, aus dem Host-Namen eine zweite Zeichenkette zu extrahieren und aus der zweiten Zeichenkette die Adresse des entsprechenden Endgeräts zu ermitteln.

Gemäß einer weiteren Ausführungsform erfolgt das Ermitteln einer Adresse anhand Nachschlagen der jeweiligen Zeichenkette in einer Tabelle.

Alternativ oder zusätzlich kann das Ermitteln einer Adresse anhand Aufspalten des Host-Namens erfolgen.

Weitere Ausführungsformen betreffen eine Service-Komponente, die eingerichtet ist, als Antwort auf eine Verbindungsanfrage eines Clients an einen Host-Namen zu prüfen, ob für ein Endgerät, dem der Host-Name zugeordnet ist, ein Zertifikat vorliegt, wobei die Service-Komponente von einem externen Zertifizierter ein Zertifikat anfordert, falls kein Zertifikat vorliegt, und anhand des Zertifikats über einen Server eine Verbindung zu dem Client aufbaut und Datenpakete zwischen dem Client und dem Endgerät weiterleitet, wobei der Server eingerichtet ist, als Antwort auf die Verbindungsanfrage des Clients an den Host-Namen die Verbindungsanfrage an die Service-Komponente weiterzuleiten.

Insbesondere kann die Service-Komponente ferner eingerichtet sein, aus dem Host-Namen eine Zeichenkette zu extrahieren und aus der Zeichenkette die Adresse des entsprechenden Endgeräts zu ermitteln.

Gemäß einer besonders vorteilhaften Ausführungsform kann das Ermitteln der Adresse anhand Nachschlagen der Zeichenkette in einer Tabelle erfolgen.

Alternativ oder zusätzlich kann das Ermitteln der Adresse anhand Aufspalten des Host-Namens erfolgen.

Weitere Ausführungsformen betreffen ein Verfahren, umfassend Bereitstellen, durch einen Server, eines Host-Namens für jeden aus einer Anzahl von Endgeräten, wobei der Host-Name dem jeweiligen Endgerät sowie einer Service-Komponente zugeordnet ist, mit der das jeweilige Endgerät verbunden ist; als Antwort auf eine Verbindungsanfrage eines Clients an einen der Host-Namen Weiterleiten, durch den Server, der Verbindungsanfrage an diejenige der ein oder mehreren Service-Komponenten, der der Host-Name zugeordnet ist; und als Antwort auf die Verbindungsanfrage Prüfen, durch die Service-Komponente, ob für das Endgerät, dem der Host-Name zugeordnet ist, ein Zertifikat vorliegt, und Anfordern eines Zertifikats durch die Service-Komponente von einem externen Zertifizierer, falls kein Zertifikat vorliegt sowie Aufbauen einer Verbindung zu dem Client und Weiterleiten von Datenpaketen zwischen dem Client und dem Endgerät.

Insbesondere kann das Verfahren umfassen, dass der Server aus dem Host-Namen eine erste Zeichenkette extrahiert und aus der ersten Zeichenkette die Adresse der entsprechenden Service-Komponente ermittelt.

Vorteilhafterweise extrahiert die Service-Komponente aus dem Host-Namen eine zweite Zeichenkette und ermittelt aus der zweiten Zeichenkette die Adresse des entsprechenden Endgeräts.

Beispielsweise erfolgt das Ermitteln einer Adresse anhand Nachschlagen der jeweiligen Zeichenkette in einer Tabelle.

Alternativ oder zusätzlich erfolgt das Ermitteln einer Adresse anhand Aufspalten des Host-Namens.

Weitere Ausführungsformen betreffen ein computerlesbares Medium mit Befehlen, die, wenn sie durch einen oder mehrere Prozessoren ausgeführt werden, erfindungsgemäße Verfahren gemäß den obigen Erläuterungen durchführen.

Eine erfinderische Tätigkeit wird erzielt durch kennungsbasierte Weiterleitung einer Verbindungsanforderung an ein lokales Endgerät sowie durch Anfordern eines Zertifikats lediglich für diejenigen Endgeräte, für die eine Verbindungsanforderung erhalten wurde.

### KURZE BESCHREIBUNG DER ZEICHNUNGEN

- Figur 1: zeigt ein System gemäß Ausführungsformen der Erfindung.
- Figur 2: zeigt ein Verfahren gemäß Ausführungsformen der Erfindung.

### AUSFÜHRLICHE BESCHREIBUNG

Gemäß einer ersten Ausführungsform der Erfindung richtet ein Client eine Verbindungsanforderung an einen Host-Namen, der durch einen Server bereitgestellt wird. Host-Namen sind Domain-Name-Service, DNS,-Namen, die von DNS-Servern einer IP-Adresse zugeordnet und mittels Routing an ihr Ziel geleitet werden können. Der Host-Name ist einem Endgerät zugeordnet, das direkt oder indirekt mit dem Server verbunden ist und nicht notwendigerweise über eine eigene globale IP-Adresse verfügt. Die Verbindungsanforderung kann beispielsweise durch Interaktion eines Benutzers mit einem Webbrowser ausgelöst werden und in Form eines HTTP-Request erfolgen. Alternativ kann die Verbindungsanforderung mittels eines anderen Protokolls erfolgen, beispielsweise mittels FTP, SSH oder eines anderen Protokolls, das geeignet ist, Host-Namen zu adressieren.

Der Server ist mit wenigstens einer Service-Komponente verbunden. Mit jeder Service-Komponente sind ein oder mehrere Endgeräte verbunden. Die Service-Komponenten können Bestandteil des Servers sein oder als separate Einheiten vorliegen, und können als Schaltung oder als Software ausgeführt sein. Die Endgeräte können als Webserver ausgeführt sein oder als Server, die entsprechend einem Protokoll der Verbindungsanforderung des Client arbeiten. Jegliche Verbindung zwischen diesen Endgeräten und der Service-Komponente beziehungsweise dem mit dem Client verbundenen Server erfolgt über die Service-Komponente. Beispielsweise kann die Service-Komponente als Proxy oder Firewall eines lokalen Netzwerks eingerichtet sein, über die jegliche Kommunikation zwischen den Endgeräten und außenstehenden Geräten wie dem Client vermittelt wird.

Der Server stellt für jedes der Endgeräte, die über eine Service-Komponente mit ihm verbunden sind, einen jeweiligen eindeutigen Host-Namen bereit, der vom Client verwendet werden kann. Das IP-Protokoll ermöglicht es, einer IP-Adresse einen oder auch mehrere Host-Namen zuzuordnen.

Gemäß einer besonderen Ausführungsform erhält der Server sämtliche Pakete, die an eine ihm zugordnete IP-Adresse beziehungsweise einen oder mehrere ihm zugeordnete DNS-/Host-Namen gerichtet sind. In einer ersten Ausführungsform extrahiert der Server aus dem Host-Namen eine erste Zeichenkette, um eine lokale Adresse des Endgerätes, beispielsweise eine IP-Adresse, zu bestimmen, an das die Verbindungsanfrage weiterzuleiten ist. Vorteilhafterweise wird hierzu eine Anfangszeichenkette des Host-Namens untersucht. Host-Namen sind üblicherweise durch Punkte (.) unterteilt, wobei die Zeichenkette nach dem letzten Punkt die Top-Level-Domain (TLD) darstellt, beispielsweise ".de". Die Anfangszeichenkette steht beispielsweise vor dem ersten Punkt in dem Host-Namen und kann etwa mittels eines regulären Ausdrucks (regular expression) extrahiert werden. Zur Unterscheidung der IP-Adresse in dem Host-Namen kann diese innerhalb des Host-Namens andere Trennsymbole als die üblichen Punkte enthalten.

Ein Beispiel für einen solchen Host-Namen lautet 192-168-137-12.my-sda.net, wobei die Anfangszeichenkette 192-168-137-12 lautet. Gemäß einer Ausführungsform kann anhand dieser Anfangszeichenkette durch den Server die Service-Komponente ermittelt werden, die mit dem betreffenden Endgerät verbunden ist. Hierzu kann eine Adresse oder ein Bezeichner der Service-Komponente in einer Tabelle des Servers nachgeschlagen werden.

Der Server leitet die Verbindungsanfrage anhand der Adresse der Service-Komponente an diese weiter. Der Host-Name wird mitsamt der Verbindungsanfrage weitergeleitet.

Die Service-Komponente ermittelt nach Empfangen der Verbindungsanfrage das Endgerät, an das die Verbindungsanfrage adressiert ist. Dies erfolgt beispielsweise durch Ersetzen der Trennsymbole in der Anfangszeichenkette durch Punkte, so dass eine herkömmliche IP-Adresse entsteht.

Gemäß einer Ausführungsform wird ein Bezeichner der Service-Komponente nicht mittels Anfangszeichenkette nachgeschlagen, sondern ist in dem Hostnamen enthalten, beispielsweise in einem vorbestimmten Feld. Ein entsprechender Host-Name kann etwa 192-168-137-12.isyyyyyyp8.my-sda.net lauten, wobei der Bezeichner der Service-Komponente isyyyyyyp8 ist. In dieser Ausführungsform extrahiert der Server das zweite Feld des durch Punkte unterteilten Host-Namens und ermittelt damit den Bezeichner der Service-Komponente Anschließend wird die Verbindungsanforderung an die ermittelte Service-Komponente weitergeleitet. Die Service-Komponente ermittelt aus der Anfangszeichenkette die vollständige Adresse des Endgeräts, also 192.168.137.12.

Außerdem überprüft die Service-Komponente, ob für den Host-Namen des Endgeräts, an das die Verbindungsanforderung weitergeleitet werden soll, ein Zertifikat vorliegt. Die Art des Zertifikats wird durch das Protokoll bestimmt, das der Verbindungsanforderung zugrunde liegt. Beispielsweise wird für eine Verbindungsanfrage gemäß HTTPS ein SSL-Zertifikat oder TLS-Zertifikat benötigt. Derartige Zertifikate werden auch für VPN-, FTPS- und andere Protokolle benötigt. Das Bestimmen, ob ein Zertifikat vorliegt, kann beispielsweise durch Nachschlagen in einer lokalen Datentabelle erfolgen, die auf der Service-Komponente gespeichert ist. Alternativ kann eine entsprechende Anforderung direkt an einen externen Zertifizierer gesendet werden. Liegt für das Endgerät kein Zertifikat vor, fordert die Service-Komponente ein Zertifikat für dieses Endgerät bei dem externen Zertifizierer an. In bestimmten Ausführungsformen wird für jedes Endgerät ein separates Zertifikat benötigt. Alternativ kann ein einziges Zertifikat für mehrere Endgeräte verwendet werden, beispielsweise ein Zertifikat für alle Endgeräte, die mit dieser Service-Komponente verbunden sind.

Nach Erhalt des Zertifikats erwidert die Service-Komponente die Verbindungsanforderung durch Aufbauen einer Verbindung zu dem Client über den Server. Dieser Verbindungsaufbau erfolgt gemäß den für die Verwendung des Zertifikats üblichen Schritten. Beispielsweise wird das Zertifikat an den Client übermittelt, um diesem eine Überprüfung auf Authentizität des Servers zu ermöglichen. Ab diesem Zeitpunkt kann der Client mit der Service-Komponente über den Server Datenpakete austauschen. In bestimmten Ausführungsformen kann das Zertifikat verwendet werden, um die Verbindung zu verschlüsseln.

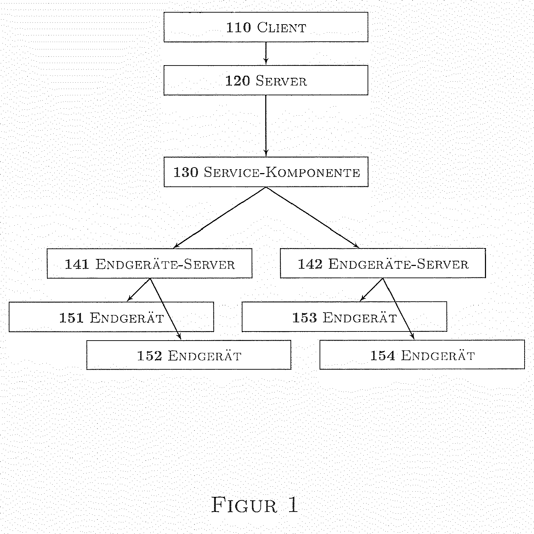

Figur 1 zeigt ein beispielhaftes System 100. Ein Server 120 ist eingerichtet, um Verbindungsanfragen eines Clients 110 zu erhalten. Nach Erhalt einer Verbindungsanforderung extrahiert Server 120 in einer Ausführungsform eine Adresse eines Endgeräts aus einem Teil eines Host-Namens der Verbindungsanforderung. Beispielsweise ermittelt der Server, wie oben beschrieben, eine lokale Netzwerkadresse eines Endgeräts, indem er eine Zeichenkette aus dem Host-Namen extrahiert. In einer Ausführungsform ist dies eine Anfangszeichenkette, die durch Trennsymbole unterteilte Adressfelder enthält. Alternativ kann die Adresse des Endgeräts in einer anderen Zeichenkette stehen, beispielsweise einer Zeichenkette, die an Stelle N in dem Host-Namen steht, oder einem N-ten Feld des Host-Namens. Im letzteren Beispiel wird ein N-tes Feld ermittelt, indem die durch Punkte unterteilten Felder des Host-Namens betrachtet werden. Auf diese Weise kann der Server 120 die Netzwerkadressen von Endgeräten 151, 152, 153, oder 154 bestimmen. Der Host-Name muss nicht unbedingt eine tatsächliche Adresse enthalten, sondern kann eine Kennung enthalten, die von dem Server über eine Tabelle auf eine tatsächliche Adresse abgebildet wird. Derartige Ausführungsformen sind vorteilhaft insofern, als sie nach außen diese Adressen nicht preisgeben. Ein weiterer Vorteil besteht darin, dass eine interne Änderung einer Adresse lediglich eine Aktualisierung der Tabelle erfordert, um unter dem gleichen Host-Namen auch die neue Adresse zu verwenden. Ein Bezeichner oder eine Adresse einer Service-Komponente mit der das Endgerät verbunden ist, kann mittels Nachschlagen der Adresse des Endgeräts in einer Tabelle ermittelt werden. In bestimmten Ausführungsformen wird auch die Adresse oder der Bezeichner der Service-Komponente aus dem Host-Namen ermittelt. Der Bezeichner der Service-Komponente kann in einem weiteren Feld des Host-Namens enthalten sein.

Der Server 120 versendet eine Anfrage an die Service-Komponente 131 beziehungsweise 132, die ermittelt wurd. Die Service-Komponente 131 oder 132 prüft, ob für die Zieladresse ein Zertifikat vorliegt. Beispielsweise wird geprüft, ob für die aktuelle Kombination aus Service-Komponente und Endgerät bereits ein Zertifikat vorliegt. Alternativ wird geprüft, ob für die Service-Komponente ein Zertifikat vorliegt.

Liegt kein Zertifikat vor, so wird dieses durch die Service-Komponente von einem externen Zertifizierer (nicht gezeigt) angefordert. Liegt das Zertifikat vor, erwidert die Service-Komponente die Verbindungsanforderung durch einen Verbindungsaufbau über den Server 120 mit dem Client 110. Hierzu wird zunächst das Zertifikat an den Client 110 übermittelt, um diesem zu ermöglichen, die Authentizität des Servers 120 zu identifizieren. Eine solche Identifizierung erfolgt beispielsweise durch Überprüfen des Zertifikats mittels Prüfalgorithmen oder mittels Kommunikation zwischen Client 110 und externem Zertifizierer. Ab diesem Zeitpunkt können zwischen Client und Service-Komponente Datenpakete übermittelt werden. Die Service-Komponente reicht eintreffende Datenpakete an die durch die ermittelten Adressen angegebenen Endgeräte. Dort werden die Datenpakete verarbeitet und beantwortet, wobei Antwortpakete der Endgeräte über die entsprechende Service-Komponente und den Server 120 zurück an den Client 110 geleitet werden.

Die in Figur 1 gezeigten Endgeräte 141, 142, 143 und 144 sowie die Service-Komponenten 131 und 132 haben lediglich Symbolcharakter. Die Erfindung umfasst Systeme, bei denen beliebig viele Service-Komponenten und Endgeräte miteinander verbunden sind. Insbesondere funktioniert die Erfindung auch ohne Endgeräte. In diesem Fall wird eine zertifizierte Verbindung lediglich zwischen Service-Komponente 131 oder 132 und Client 110 aufgebaut. Auch können Verbindungen zwischen anderen Clients als lediglich zwischen Client 110 und Server 120 aufgebaut werden. In Ausführungsformen ohne Endgerät ist die Adresse, die aus dem Host-Namen ermittelt wurde, lediglich der Service-Komponente zugeordnet, an die weitergeleitet werden soll.

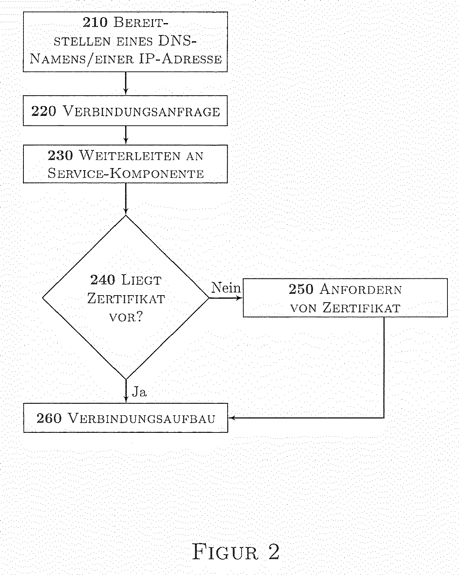

Figur 2 zeigt ein beispielhaftes Verfahren zum Verbindungsaufbau zwischen einem Client und einem Endgerät.

Zunächst erfolgt durch einen Server, beispielsweise Server 120, Bereitstellen 210 eines Host-Namens für jeden aus einer Anzahl von Endgeräten.

Der Server erhält in Schritt 220 eine Verbindungsanfrage von einem Client, beispielsweise Client 110, die an einen der bereitgestellten Host-Namen gerichtet ist. Als Antwort auf Erhalt dieser Verbindungsanfrage ermittelt der Server zunächst den eigentlichen Adressaten der Verbindungsanfrage. Hierzu kann der Server einen ersten Bestandteil des Host-Namens in einer Tabelle nachschlagen, um lokale Adressen für Service-Komponente und/oder Endgerät zu erhalten. Alternativ kann der Server diese Adressen unmittelbar aus einem Bestandteil des Host-Namens, beispielsweise einer Anfangszeichenkette, extrahieren, beispielsweise durch Parsieren des Bestandteils in weitere Zeichenketten.

Anhand der ermittelten Adresse der Service-Komponente wird die Verbindungsanforderung an diese in Schritt 230 weitergeleitet. Die Service-Komponente prüft daraufhin in Schritt 240, ob für den betreffenden Adressaten, also entweder die Service-Komponente selbst oder ein adressiertes Endgerät ein Zertifikat vorliegt. Ist dies nicht der Fall, wird in Schritt 250 ein Zertifikat für den Adressaten von einem externen Zertifizierer angefordert.

Liegt ein Zertifikat vor, beginnt die Service-Komponente in Schritt 260 mit dem Verbindungsaufbau. Hierzu wird zunächst das Zertifikat an den Client gesendet, um diesem eine Prüfung der Authentizität des Servers zu ermöglichen. Weitere Datenpakete, die von dem Client an den gleichen Adressaten gesendet werden, erreichen die Service-Komponente auf dem oben beschriebenen Weg und werden von dort aus an das betreffende Endgerät geleitet. Das Endgerät verarbeitet das Datenpaket und sendet eine Antwort an die Service-Komponente. Die Antwort wird über den Server an den Client weitergeleitet.

Durch die Erfindung wird es somit möglich, zertifizierte Punkt-zu-Punkt-Verbindungen zwischen einem externen Client und einem Endgerät aufzubauen, dem keine eigene global gültige IP-Adresse zugeordnet ist. Dies ist insbesondere für solche Endgeräte von Nutzen, die Teile eines lokalen Netzwerks sind, deren Knoten über keine globalen IP-Adressen verfügen. Die Erfindung minimiert den Aufwand für das Erstellen von Zertifikaten, da diese lediglich bei Bedarf angefordert werden. Ist ein Zertifikat einmal vorhanden, braucht es für die Dauer seiner Gültigkeit kein zweites Mal erstellt zu werden.

## Patentansprüche

1. System (100), umfassend:
einen Client (110);
einen Server (120);
eine oder mehrere Service-Komponenten (131,132); und
ein oder mehrere Endgeräte (141, 142), die mit den ein oder mehreren Service-Komponenten (131, 132) verbunden sind;
wobei der Server (120) für jedes der Endgeräte (141, 142) einen Host-Namen bereitstellt, der dem jeweiligen Endgerät (141, 142) sowie der entsprechenden Service-Komponente (131, 132) zugeordnet ist;
wobei der Server (120) eingerichtet ist, als Antwort auf eine Verbindungsanfrage des Clients (110) an einen der Host-Namen die Verbindungsanfrage an diejenige der ein oder mehreren Service-Komponenten (131, 132) weiterzuleiten, der der Host-Name zugeordnet ist; und
wobei jede der Service-Komponenten (131, 132) eingerichtet ist, als Antwort auf eine Verbindungsanfrage zu prüfen, ob für das Endgerät (141, 142), dem der Host-Name zugeordnet ist, ein Zertifikat vorliegt, wobei die Service-Komponente (131, 132) von einem externen Zertifizierer ein Zertifikat anfordert, falls kein Zertifikat vorliegt, und anhand des Zertifikats über den Server (120) eine Verbindung zu dem Client (110) aufbaut und Datenpakete zwischen dem Client (110) und dem Endgerät (141, 142) weiterleitet.

2. System (100) nach Anspruch 1, wobei der Server (120) ferner eingerichtet ist, aus dem Host-Namen eine erste Zeichenkette zu extrahieren und aus der ersten Zeichenkette die Adresse eines entsprechenden Endgeräts (141, 142) zu ermitteln.

3. System (100) nach Anspruch 2, wobei die Service-Komponente (131, 132) ferner eingerichtet ist, aus dem Host-Namen eine zweite Zeichenkette zu extrahieren und aus der zweiten Zeichenkette die Adresse des entsprechenden Endgeräts (141, 142) zu ermitteln.

4. System (100) nach Anspruch 2 oder 3, wobei das Ermitteln einer Adresse anhand Nachschlagen der jeweiligen Zeichenkette in einer Tabelle erfolgt.

5. System (100) nach Anspruch 2 oder 3, wobei das Ermitteln einer Adresse anhand Aufspalten des Host-Namens erfolgt.

6. Service-Komponente (131, 132), die eingerichtet ist, als Antwort auf eine Verbindungsanfrage eines Clients (110) an einen Host-Namen zu prüfen, ob für ein Endgerät (141, 142), dem der Host-Name zugeordnet ist, ein Zertifikat vorliegt, wobei die Service-Komponente (131, 132) von einem externen Zertifizierer ein Zertifikat anfordert, falls kein Zertifikat vorliegt, und anhand des Zertifikats über einen Server (120) eine Verbindung zu dem Client (110) aufbaut und Datenpakete zwischen dem Client (110) und dem Endgerät (141, 142) weiterleitet, wobei der Server (120) eingerichtet ist, als Antwort auf die Verbindungsanfrage des Clients (110) an den Host-Namen die Verbindungsanfrage an die Service-Komponente (131, 132) weiterzuleiten.

7. Service-Komponente (131, 132) nach Anspruch 6, wobei die Service-Komponente (131, 132) ferner eingerichtet ist, aus dem Host-Namen eine Zeichenkette zu extrahieren und aus der Zeichenkette die Adresse des entsprechenden Endgeräts (141, 142) zu ermitteln.

8. Service-Komponente (131, 132) nach Anspruch 7, wobei das Ermitteln der Adresse anhand Nachschlagen der Zeichenkette in einer Tabelle erfolgt.

9. Service-Komponente (131, 132) nach Anspruch 7, wobei das Ermitteln der Adresse anhand Aufspalten des Host-Namens erfolgt.

10. Verfahren (200), umfassend:
Bereitstellen (210), durch einen Server (120), eines Host-Namens für jeden aus einer Anzahl von Endgeräten (141, 142), wobei der Host-Name dem jeweiligen Endgerät (141, 142) sowie einer Service-Komponente (131, 132) zugeordnet ist, mit der das jeweilige Endgerät (141, 142) verbunden ist;
als Antwort auf eine Verbindungsanfrage eines Clients (110) an einen der Host-Namen Weiterleiten (230), durch den Server (120), der Verbindungsanfrage an diejenige der ein oder mehreren Service-Komponenten (131, 132), der der Host-Name zugeordnet ist; und
als Antwort auf die Verbindungsanfrage prüfen (240), durch die Service-Komponente (131, 132), ob für das Endgerät (141, 142), dem der Host-Name zugeordnet ist, ein Zertifikat vorliegt, und Anfordern (250) eines Zertifikats durch die Service-Komponente (131, 132) von einem externen Zertifizierer, falls kein Zertifikat vorliegt sowie Aufbauen (260) einer Verbindung zu dem Client (110) und Weiterleiten von Datenpaketen zwischen dem Client (110) und dem Endgerät (141, 142).

11. Verfahren (200) nach Anspruch 10, wobei der Server (120) aus dem Host-Namen eine erste Zeichenkette extrahiert und aus der ersten Zeichenkette die Adresse der entsprechenden Service-Komponente (131, 132) ermittelt.

12. Verfahren (200) nach Anspruch 10, wobei die Service-Komponente (131, 132) aus dem Host-Namen eine zweite Zeichenkette extrahiert und aus der zweiten Zeichenkette die Adresse des entsprechenden Endgeräts (141, 142) ermittelt.

13. Verfahren (200) nach Anspruch 11 oder 12, wobei das Ermitteln einer Adresse anhand Nachschlagen der jeweiligen Zeichenkette in einer Tabelle erfolgt.

14. Verfahren (200) nach Anspruch 11 oder 12, wobei das Ermitteln einer Adresse anhand Aufspalten des Host-Namens erfolgt.

15. Computerlesbares Medium mit Befehlen, die, wenn sie durch einen oder mehrere Prozessoren ausgeführt werden, das Verfahren nach einem der Ansprüche 10 bis 14 durchführen.

## Claims

1. A system (100), comprising:
a client (110);
a server (120);
one or more service components (131, 132); and
one or more end devices (141, 142) connected to the one or more service components (131, 132);
wherein for each of the end devices (141, 142), the server (120) provides a host name, which is assigned to the respective end device (141, 142) and to the corresponding service component (131, 132);
wherein the server (120) is configured, in response to a request by the client (110) to link to one of the host names, to transmit said link request to the service component of the one or more service components (131, 132) to which the host name is assigned; and
wherein each of the service components (131, 132) is configured, in response to a link request, to check whether a certificate is on hand for the end device (141, 142) to which the host name is assigned, wherein if no certificate is on hand, the service component (131, 132) requests a certificate from an external certifier, and based on said certificate, establishes a link with the client (110) via the server (120) and transmits data packets between the client (110) and the end device (141, 142).

2. The system (100) according to Claim 1, wherein the server (120) is further configured to extract a first character string from the host name, and to determine the address of a corresponding end device (141, 142) from the first character string.

3. The system (100) according to Claim 2, wherein the service component (131, 132) is further configured to extract a second character string from the host name and to determine the address of the corresponding end device (141, 142) from the second character string.

4. The system (100) according to Claim 2 or 3, wherein the address is determined by looking the respective character string up in a table.

5. The system (100) according to Claim 2 or 3, wherein the address is determined by breaking down the host name.

6. A service component (131, 132) configured, in response to a request by a client (110) to link to a host name, to check whether a certificate is on hand for an end device (141, 142) to which the host name is assigned, wherein if no certificate is on hand, the service component (131, 132) requests a certificate from an external certifier, and based on said certificate, establishes a link with the client (110) via a server (120) and then transmits data packets between the client (110) and the end device (141, 142), wherein the server (120) is configured, in response to the request by the client (110) to link to the host name, to transmit the link request to the service component (131, 132).

7. The service component (131, 132) according to Claim 6, wherein the service component (131, 132) is further configured to extract a character string from the host name and to determine the address of the corresponding end device (141, 142) from the character string.

8. The service component (131, 132) according to Claim 7, wherein the address is determined by looking the character string up in a table.

9. The service component (131, 132) according to Claim 7, wherein the address is determined by breaking down the host name.

10. A method (200), comprising:
a server (120) providing (210) a host name for each of a number of end devices (141, 142), wherein the host name is assigned to the respective end device (141, 142) and to a service component (131, 132) to which the respective end device (141, 142) is connected;
in response to a request by a client (110) to link to one of the host names, the server (120) transmitting (230) the link request to the service component of the one or more service components (131, 132) to which the host name is assigned; and
in response to the link request, the service component (131, 132) checking (240) whether a certificate is on hand for the end device (141, 142) to which the host name is assigned, and if no certificate is on hand, the service component (131, 132) requesting (250) a certificate from an external certifier and establishing (260) a link to the client (110) and then transmitting data packets between the client (110) and the end device (141, 142).

11. The method (200) according to Claim 10, wherein the server (120) extracts a first character string from the host name and determines the address of the corresponding service component (131, 132) from the first character string.

12. The method (200) according to Claim 10, wherein the service component (131, 132) extracts a second character string from the host name and determines the address of the corresponding end device (141, 142) from this second character string.

13. The method (200) according to Claim 11 or 12, wherein the address is determined by looking the respective character string up in a table.

14. The method (200) according to Claim 11 or 12, wherein the address is determined by breaking down the host name.

15. A computer-readable medium having commands that, when executed by one or more processors, carry out the method according to any one of Claims 10 to 14.

## Revendications

1. Système (100), comprenant
un client (110) ;
un serveur (120) ;
un ou plusieurs composants de service (131, 132) ; et
un ou plusieurs terminaux (141, 142) qui sont connectés au ou aux plusieurs composants de service (131, 132) ;
le serveur (120) fournissant pour chacun des terminaux (141, 142) un nom d'hôte qui est affecté au terminal (141, 142) respectif ainsi qu'au composant de service (131, 132) correspondant ;
le serveur étant agencé pour, en réponse à une demande de connexion du client (110) à un nom d'hôte, transférer la demande de connexion à celui du ou des plusieurs composants de service (131, 132) auquel le nom d'hôte est affecté ; et
chacun des composants de service (131, 132) étant agencé pour, en réponse à une demande de connexion, examiner si, pour le terminal (141, 142) auquel le nom d'hôte est affecté, il existe un certificat, le composant de service (131, 132) demandant un certificat à un certificateur externe s'il n'existe pas de certificat et, à l'aide du certificat, établissant via le serveur (120) une connexion au client (110) et transférant des paquets de données entre le client (110) et le terminal (141, 142).

2. Système (100) selon la revendication 1, le serveur (120) étant en outre agencé pour extraire une première chaîne de caractères à partir du nom d'hôte et pour, à partir de la première chaîne de caractères, déterminer l'adresse d'un terminal (141, 142) correspondant.

3. Système (100) selon la revendication 2, le composant de service (131, 132) étant en outre agencé pour extraire une deuxième chaîne de caractères à partir du nom d'hôte et pour, à partir de la deuxième chaîne de caractères, déterminer l'adresse du terminal (141, 142) correspondant.

4. Système (100) selon la revendication 2 ou 3, la détermination d'une adresse s'effectuant à l'aide de la consultation de la chaîne de caractères respective dans un tableau.

5. Système (100) selon la revendication 2 ou 3, la détermination d'une adresse s'effectuant à l'aide du fractionnement du nom d'hôte.

6. Composant de service (131, 132), qui est agencé pour, en réponse à une demande de connexion d'un client (110) à un nom d'hôte, examiner si, pour un terminal (141, 142) auquel le nom d'hôte est affecté, il existe un certificat, le composant de service (131, 132) demandant un certificat à un certificateur externe s'il n'existe pas de certificat et, à l'aide du certificat, établissant via un serveur (120) une connexion au client (110) et transférant des paquets de données entre le client (110) et le terminal (141, 142), le serveur (120) étant agencé pour, en réponse à la demande de connexion du client (110) au nom d'hôte, transférer la demande de connexion au composant de service (131, 132).

7. Composant de service (131, 132) selon la revendication 6, le composant de service (131, 132) étant en outre agencé pour extraire une chaîne de caractères à partir du nom d'hôte et pour, à partir de la chaîne de caractères, déterminer l'adresse du terminal (141, 142) correspondant.

8. Composant de service (131, 132) selon la revendication 7, la détermination de l'adresse s'effectuant à l'aide de la consultation de la chaîne de caractères dans un tableau.

9. Composant de service (131, 132) selon la revendication 7, la détermination de l'adresse s'effectuant à l'aide du fractionnement du nom d'hôte.

10. Procédé (200), comprenant :
la fourniture (210), par un serveur (120), d'un nom d'hôte pour chacun d'une quantité de terminaux (141, 142), le nom d'hôte étant affecté au terminal (141, 142) respectif ainsi qu'à un composant de service (131, 132) auquel le terminal (141, 142) respectif est connecté ;
en réponse à une demande de connexion d'un client (110) à l'un des noms d'hôte, transfert (230), par le serveur (120), de la demande de connexion à celui du ou des plusieurs composants de service (131, 132) auquel le non détachable est affecté ; et
en réponse à la demande de connexion, action d'examiner (240), par le composant de service (131, 132), si, pour le terminal (141, 142) auquel est affecté le nom d'hôte, il existe un certificat, et demande (250), effectuée par le composant de service (131, 132) auprès d'un certificateur externe, d'un certificat s'il n'existe pas de certificat, ainsi qu'établissement (260) d'une connexion avec le client (110) et transfert de paquets de données entre le client (110) et le terminal (141, 142).

11. Procédé (200) selon la revendication 10, le serveur (120) extrayant une première chaîne de caractères à partir du nom d'hôte et déterminant, à partir de la première chaîne de caractères, l'adresse du composant de service (131, 132) correspondant.

12. Procédé (200) selon la revendication 10, le composant de service (131, 132) extrayant une deuxième chaîne de caractères à partir du nom d'hôte et déterminant, à partir de la deuxième chaîne de caractères, l'adresse du terminal (141, 142) correspondant.

13. Procédé (200) selon la revendication 11 ou 12, la détermination d'une adresse s'effectuant à l'aide de la consultation de la chaîne de caractères respective dans un tableau.

14. Procédé (200) selon la revendication 11 ou 12, la détermination d'une adresse s'effectuant à l'aide du fractionnement du nom d'hôte.

15. Support lisible par ordinateur, avec des instructions qui, quand elles sont exécutées par un ou plusieurs processeurs, exécutent le procédé selon l'une des revendications 10 à 14.
